# EUROPÄISCHE PATENTSCHRIFT

(11) **EP 3 102 509 B1**
(45) Veröffentlichungstag und Bekanntmachung des Hinweises auf die Patenterteilung: **25.10.2017**
(21) Anmeldenummer: 14821185.7
(22) Anmeldetag: 23.12.2014
(51) Int. Cl.: B65G 17/34, B65G 37/00

(54) **TRANSPORTVORRICHTUNG**
CONVEYING ARRANGEMENT
SYSTÈME DE TRANSPORT

(30) Priorität: 06.02.2014 DE 102014202124
(43) Veröffentlichungstag der Anmeldung: 14.12.2016
(73) Patentinhaber: Robert Bosch GmbH, 70442 Stuttgart (DE)
(72) Erfinder: SCHWANDT, Matthias, 74564 Crailsheim (DE); DAMAVANDI, Reza, 74564 Crailsheim (DE); SCHMIDT, Johann, 74564 Crailsheim (DE); STADELMANN, Joerg, 73655 Pluederhausen (DE)
(86) Internationale Anmeldenummer: PCT/EP2014/079134
(87) Internationale Veröffentlichungsnummer: WO 2015/117713

(56) Entgegenhaltungen:
- EP-A1- 0 450 915
- EP-A2- 0 544 326
- CH-A- 252 041
- JP-A- H01 167 108
- US-A- 4 200 183
- US-A- 4 787 505

## Beschreibung

### Stand der Technik

Die vorliegende Erfindung betrifft eine Transportvorrichtung zum Transportieren eines Produkts, insbesondere zum Transportieren von Nestern für pharmazeutische/medizinische Anwendungen, beispielsweise zum Transport von mit Spritzen gefüllten Nestern.

In der pharmazeutischen Industrie ergibt sich insbesondere aufgrund von unterschiedlichen Verpackungsgrößen und verschiedensten Produkten häufig die Notwendigkeit einer Formatumstellung bei Transportaufgaben. Da häufig toxische Stoffe und/oder zerbrechliche Behältnisse, z.B. Glasampullen oder dergleichen, transportiert werden müssen, muss eine Formatumstellung sehr genau erfolgen. Die Umstellung der Formate der Transportvorrichtung bedeutet jedoch einen Stillstand im Arbeitsablauf und sollte daher möglichst schnell und einfach durchführbar sein. Ferner ist aus der US 4,787,505 B eine Transportvorrichtung gemäß dem Oberbegriff des Anspruchs 1 bekannt.

### Offenbarung der Erfindung

Die erfindungsgemäße Transportvorrichtung zum Transportieren von Produkten mit den Merkmalen des Anspruchs 1 weist dem gegenüber den Vorteil auf, dass eine schnelle und einfache Formatumstellung möglich ist. Dadurch können Produkte unterschiedlichen Formats mit der Transportvorrichtung gefördert werden, ohne dass lange Rüstzeiten hierfür notwendig sind. Die erfindungsgemäße Transportvorrichtung umfasst dabei eine umlaufende Fördereinrichtung und eine Formatverstelleinrichtung. Die Formatverstelleinrichtung umfasst einen feststehenden ersten Formatteil und einen relativ zum feststehenden ersten Formatteil verschiebbaren zweiten Formatteil sowie eine Fixiervorrichtung. Die Fixiervorrichtung fixiert dabei eine Relativposition zwischen dem ersten und zweiten Formatteil. Ferner ist die Formatverstellvorrichtung auf der Fördereinrichtung angeordnet und ist somit gemeinsam mit der Fördereinrichtung bewegbar. Hierdurch kann ferner ein sehr kompakter und schmaler Aufbau der Transportvorrichtung sichergestellt werden. Ferner umfasst die Fördereinrichtung ein erstes Transportband und ein zweites Transportband. Die beiden Transportbänder sind dabei weiter bevorzugt gleich ausgebildet und mit einem Abstand parallel zueinander angeordnet. Dadurch ergibt sich ein Zwischenraum zwischen den beiden parallelen Transportbändern. Weiter ist jeweils auf dem ersten und zweiten Transportband eine separate Formatverstelleinrichtung angeordnet. Vorzugsweise ist dabei die Formatverstelleinrichtung des ersten Transportbandes unabhängig von der Formatverstelleinrichtung des zweiten Transportbandes verstellbar. Auf dem ersten und zweiten Transportband sind jeweils eine Vielzahl von Formatverstelleinrichtungen angeordnet. Hierbei bilden jeweils ein Paar von zueinander benachbarten Formatverstelleinrichtungen jedes der beiden Transportbänder eine Einheit, um ein Produkt an seinen vier Ecken zu fördern. Somit bilden jeweils vier Formatverstelleinrichtungen eine gemeinsame Fördereinheit, um einen Artikel, z.B. ein pharmazeutisches Nest zur Aufnahme einer Vielzahl von Behältnissen, Vials oder Spritzen oder dergleichen, aufzunehmen.

Die Unteransprüche zeigen bevorzugte Weiterbildungen der Erfindung.

Vorzugsweise weist das verschiebbare zweite Formatteil einen Schlitz auf, durch welchen die Fixiervorrichtung hindurchgeführt ist. Hierdurch kann auf einfache Weise eine relative Verschiebbarkeit zwischen dem ersten und dem zweiten Formatteil sichergestellt werden und ferner z.B. ein Klemmen einer Relativposition zwischen den beiden Formatteilen mittels einer als Klemmvorrichtung ausgebildeten Fixiervorrichtung einfach ausgeführt werden.

Weiter bevorzugt umfasst das erste Formatteil eine erste Auflagefläche und das zweite Formatteil umfasst eine zweite Auflagefläche. Das Produkt wird dabei vorzugsweise nur auf einer der Auflageflächen der Formatteile aufgelegt und gefördert.

Weiter bevorzugt ist in einer ersten Endposition der Formatverstelleinrichtung nur eine der beiden Auflageflächen der Formatteile eine Auflage für das zu transportierende Produkt und in einer zweiten Endposition der Formatverstelleinrichtung die andere der beiden Auflageflächen der Formatteile die Auflage für das zu transportierende Produkt.

Weiter bevorzugt steht in der ersten Endposition die erste Auflagefläche seitlich über die Fördereinrichtung vor und in der zweiten Endposition liegen die erste und die zweite Auflagefläche senkrecht über der Fördereinrichtung.

Weiter bevorzugt umfasst die Auflagefläche des Formatteils einen vertieften Bereich zur Aufnahme zumindest eines Teilbereichs des zu transportierenden Produkts. Vorzugsweise ist der vertiefte Bereich geometrisch derart geformt, dass er eine Form entsprechend einem Eckbereich des zu transportierenden Produkts aufweist. Besonders bevorzugt ist der vertiefte Bereich dabei ein Viertelkreis.

### Zeichnung

Nachfolgend wird ein bevorzugtes Ausführungsbeispiel der Erfindung unter Bezugnahme auf die begleitende Zeichnung im Detail beschrieben. In der Zeichnung ist:
- Figur 1: eine schematische, perspektivische Ansicht einer Transportvorrichtung gemäß einem bevorzugten Ausführungsbeispiel der Erfindung,
- Figur 2: eine schematische Draufsicht der Transportvorrichtung von Figur 1,
- Figur 3: eine schematische Teilansicht der Transportvorrichtung von Figur 1 in einer ersten Endposition und
- Figur 4: eine schematische Teilansicht der Transportvorrichtung in einer zweiten Endposition.

### Bevorzugte Ausführungsform der Erfindung

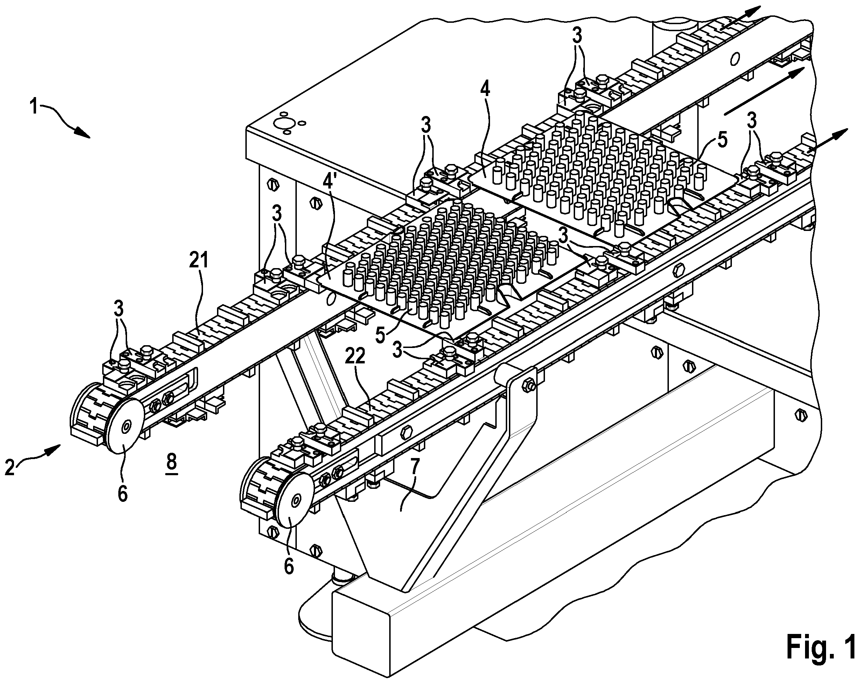

Nachfolgend wird unter Bezugnahme auf die Figuren 1 bis 4 eine Transportvorrichtung 1 zum Transportieren eines Produkts 4 im Detail beschrieben.

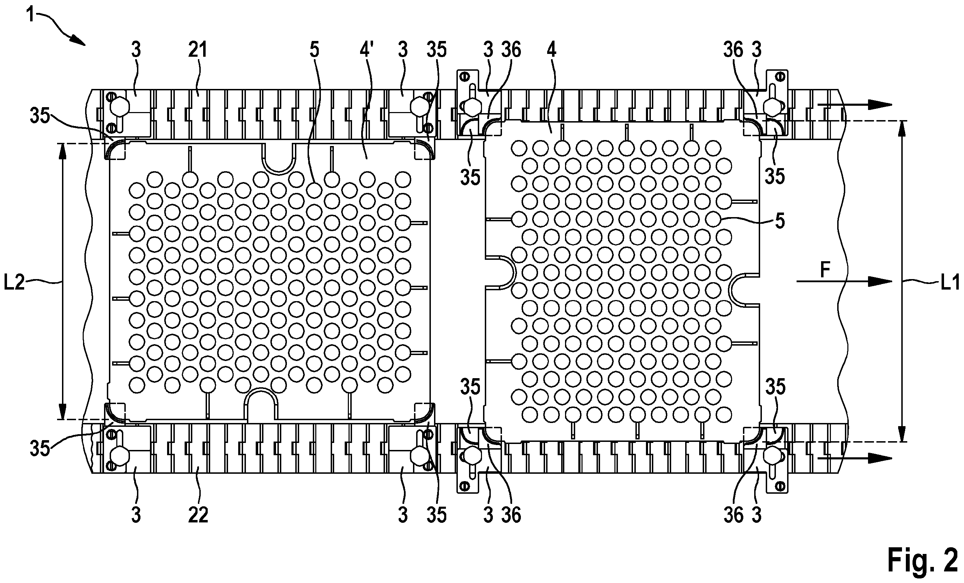

Das zu transportierende Produkt 4 ist, wie aus den Figuren 1 und 2 ersichtlich ist, ein Nest mit einer Vielzahl von darin genesteten Behältnissen 5. Das Produkt 4 weist dabei eine erste Längsseite L1 auf, welche größer ist als eine zweite Längsseite L2. Hierdurch weist in Draufsicht, wie aus Figur 2 ersichtlich ist, das Produkt 4 eine rechteckige Form auf.

In den Figuren 1 und 2 ist das Nest in unterschiedlichen Ausrichtungen dargestellt, um die Formatumstellungsproblematik zu verdeutlichen. In den Figuren 1 und 2 ist das erste Produkt 4 dabei mit seiner längeren ersten Längsseite L1 senkrecht zur Förderrichtung (Pfeil F) angeordnet und das zweite Produkt 4' mit seiner kürzeren Längsseite L2 parallel zur Förderrichtung F dargestellt.

Die Transportvorrichtung 1 umfasst eine Fördereinrichtung 2 und eine Formatverstelleinrichtung 3. In diesem Ausführungsbeispiel umfasst die Fördereinrichtung 2 ein erstes Transportband 21 und ein zweites Transportband 22. Die beiden Transportbänder 21, 22 sind gleich aufgebaut und weisen eine Vielzahl von einzelnen Gliedern 20 auf. Die umlaufenden und parallelen Transportbänder 21, 22 ermöglichen einen Transport in horizontaler Richtung und sind mittels Umlenkelementen 6 umgelenkt. Zwischen den beiden Transportbändern 21, 22 ist ein relativ breiter Zwischenraum 8 vorgesehen, so dass die zu fördernden Produkte zwischen den beiden Transportbändern gefördert werden können. Die Transportbänder 21, 22 sind mittels einer Stütze 7 abgestützt.

Auf den Transportbändern 21, 22 sind jeweils eine Vielzahl von Formatverstelleinrichtungen 3 angeordnet. Die Formatverstelleinrichtungen 3 sind dabei jeweils gleich aufgebaut, wobei die Anordnung auf den beiden Transportbändern jeweils spiegelverkehrt ist.

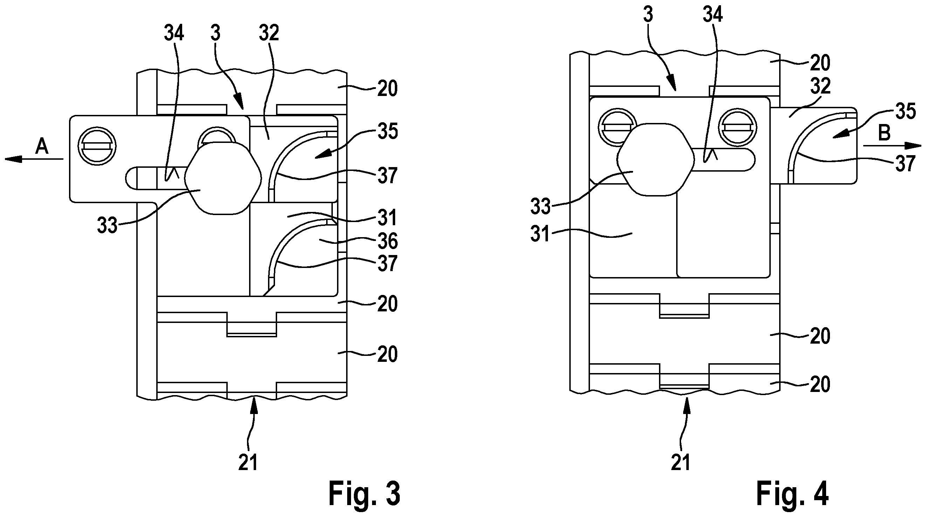

Die Formatverstelleinrichtungen 3 sind im Detail in den Figuren 3 und 4 dargestellt. Jede Formatverstelleinrichtung 3 umfasst dabei einen feststehenden ersten Formatteil 31 und einen relativ zum feststehenden ersten Formatteil 31 verschiebbaren zweiten Formatteil 32 sowie als Fixiereinrichtung eine Klemmvorrichtung 33. Eine Relativposition zwischen dem ersten und zweiten Formatteil 31, 32 wird dabei mittels der Klemmvorrichtung 33 fixiert bzw. gelöst. Wie aus den Figuren 2 bis 4 ersichtlich ist, sind die Formatverstelleinrichtungen 3 dabei jeweils unmittelbar auf den Transportbändern 21, 22 angeordnet.

Die Formatverstelleinrichtung 3 umfasst ferner einen Schlitz 34, durch welchen die Klemmvorrichtung 33 hindurchgeführt ist. Der Schlitz 34 ist in diesem Ausführungsbeispiel im verschiebbaren zweiten Formatteil 32 vorgesehen.

Das feststehende erste Formatteil 31 weist ferner eine erste Auflagefläche 36 auf und das verschiebbare zweite Formatteil 32 weist eine zweite Auflagefläche 35 auf. Jede der Auflageflächen 35, 36 umfasst dabei einen vertieften Bereich 37. Wie insbesondere aus Figur 3 ersichtlich ist sind die vertieften Bereiche 37 an der ersten und zweiten Auflagefläche 35, 36 dabei gleich aufgebaut. Wie insbesondere aus Figur 3 ersichtlich ist, bilden die vertieften Bereiche 37 jeweils einen Viertelkreis.

Figur 3 zeigt dabei eine erste Endposition der Formatverstelleinrichtung 3. In dieser ersten Endposition sind beide Auflageflächen 35, 36 über dem Transportband 21 angeordnet. In der ersten Endposition ist dabei das zu transportierende Produkt ausschließlich auf der zweiten Auflagefläche 35 angeordnet. Dies ist aus Figur 2 am Produkt 4 deutlich erkennbar. Die erste Auflagefläche 36 ist freiliegend.

Figur 4 zeigt eine zweite Endposition der Formatverstelleinrichtung, in der ausschließlich die erste Auflagefläche 36 freiliegt. In dieser Endposition kann das Produkt, wie in Figur 2 am Produkt 4' dargestellt, ausschließlich mit den ersten Auflageflächen 36 gefördert werden.

Wie ein Vergleich der Figuren 3 und 4 ergibt, kann das verschiebbare zweite Formatteil 32 relativ zum feststehenden ersten Formatteil 31 linear verschoben werden. Dies ist in den Figuren 3 und 4 durch die Pfeile A und B angedeutet. Die Formatverstelleinrichtung 3 ist dabei über das erste feststehende Formatteil 31 am Transportband 21 bzw. 22 fixiert.

Zur Formatverstellung muss somit, von einer der Endpositionen ausgehend, lediglich die Klemmvorrichtung 33 gelöst werden und dann kann der verschiebbare zweite Formatteil 32 linear relativ zum feststehenden ersten Formatteil 31 verschoben werden. Dadurch kann eine einfache und schnelle Formatumstellung erfolgen.

In dem gezeigten Ausführungsbeispiel erfolgt eine Förderung der Produkte 4 bzw. 4' dabei derart, dass jeweils die Eckbereiche der Produkte auf den Auflageflächen 35 oder 36 aufliegen. Es sei jedoch angemerkt, dass selbstverständlich auch andere Bereiche der Produkte an den Auflageflächen 35, 36 abgestützt werden können.

Der Schlitz 34, welcher im zweiten, verschiebbaren Formatteil 32 vorgesehen ist, dient auch als Wegbegrenzung des Verschiebewegs und somit auch als Anschlag für die Klemmvorrichtung 33. Dadurch kann durch Ausbildung einer vorbestimmten Länge des Schlitzes 34 die jeweilige Endposition der Formatverstelleinrichtung 3 bestimmt werden. Durch den Anschlag kann insbesondere ein sicheres und problemloses Umstellen eines Formats ohne Benutzung einer Lehre oder dergleichen ermöglicht werden. Auch kann die Formatumstellung ohne einen Austausch von Formatteilen durchgeführt werden.

## Patentansprüche

1. Transportvorrichtung zum Transportieren von Produkten, umfassend
- eine Fördereinrichtung (2) und
- eine Formatverstelleinrichtung (3) mit einem feststehenden ersten Formatteil (31) und einem relativ zum ersten Formatteil (31) verschiebbaren zweiten Formatteil (32) sowie einer Fixiervorrichtung (33), um eine Relativposition zwischen dem ersten und zweiten Formatteil zu fixieren,
- wobei die Formatverstelleinrichtung (3) auf der Fördereinrichtung (2) angeordnet ist und gemeinsam mit der Fördereinrichtung (2) bewegbar ist,
**dadurch gekennzeichnet, dass**
- die Fördereinrichtung (2) ein erstes Transportband (21) und ein zweites Transportband (22) umfasst, wobei
- eine Vielzahl von Formatverstelleinrichtungen (3) auf dem ersten und zweiten Transportband (21, 22) angeordnet sind, und
- wobei jeweils zwei Formatverstelleinrichtungen (3) des ersten Transportbandes (21) und zwei Formatverstelleinrichtungen (3) des zweiten Transportbandes (22) eine Transporteinheit bilden, um ein Produkt (4) zu fördern.

2. Transportvorrichtung nach Anspruch 1, **dadurch gekennzeichnet, dass** das verschiebbare zweite Formatteil (32) einen Schlitz (33) aufweist, durch welchen eine Fixiervorrichtung (33) hindurchführbar ist.

3. Transportvorrichtung nach einem der vorhergehenden Ansprüche, **dadurch gekennzeichnet, dass** das feststehende erste Formatteil (31) eine erste Auflagefläche (36) aufweist und das verschiebbare zweite Formatteil (32) eine zweite Auflagefläche (35) aufweist.

4. Transportvorrichtung nach Anspruch 3, **dadurch gekennzeichnet, dass** in einer ersten Endposition der Formatverstelleinrichtung (3) nur eine der Auflageflächen (35, 36) der Formatteile (31, 32) als Auflage für das zu transportierende Produkt dient und in einer zweiten Endposition der Formatverstelleinrichtung (3) nur die andere der Auflageflächen (35, 36) der Formatteile (31, 32) als Auflage für das zu transportierende Produkt dient.

5. Transportvorrichtung nach Anspruch 1, **dadurch gekennzeichnet, dass** die Formatverstelleinrichtung (3) am ersten Transportband (21) unabhängig von der Formatverstelleinrichtung (3) am zweiten Transportband (22) verstellbar ist.

6. Transportvorrichtung nach einem der Ansprüche 3 bis 5, **dadurch gekennzeichnet, dass** die Auflagefläche (35, 36) der Formatverstelleinrichtung (3) einen vertieften Bereich (37) aufweist, welcher eingerichtet ist, einen Teilbereich des Produkts aufzunehmen.

7. Transportvorrichtung nach einem der vorhergehenden Ansprüche, **dadurch gekennzeichnet, dass** die Fixiervorrichtung (33) eine Klemmvorrichtung ist.

## Claims

1. Conveying arrangement for conveying products, comprising
- a conveying device (2) and
- a format adjustment device (3) with a first format part (31), which is stationary, and a second format part (32), which is displaceable relative to the first format part (31), and also with a fixing device (33) for fixing a relative position between the first and second format part,
- the format adjustment device (3) being arranged on the conveying device (2) and being movable together with the conveying device (2),
**characterized in that**
- the conveying device (2) comprises a first conveyor belt (21) and a second conveyor belt (22), wherein
- a multiplicity of format adjustment devices (3) are arranged on the first and second conveyor belt (21, 22), and
- wherein two format adjustment devices (3) of the first conveyor belt (21) and two format adjustment devices (3) of the second conveyor belt (22) in each case form a conveying unit in order to convey a product (4).

2. Conveying arrangement according to Claim 1, **characterized in that** the displaceable second format part (32) has a slit (33), through which a fixing device (33) can be guided.

3. Conveying arrangement according to one of the preceding claims, **characterized in that** the stationary first format part (31) has a first bearing surface (36), and the displaceable second format part (32) has a second bearing surface (35).

4. Conveying arrangement according to Claim 3, **characterized in that**, in a first end position of the format adjustment device (3), only one of the bearing surfaces (35, 36) of the format parts (31, 32) serves as a bearing for the product that is to be transported, and, in a second end position of the format adjustment device (3), only the other of the bearing surfaces (35, 36) of the format parts (31, 32) serves as a bearing for the product that is to be transported.

5. Conveying arrangement according to Claim 1, **characterized in that** the format adjustment device (3) on the first conveyor belt (21) is adjustable independently of the format adjustment device (3) on the second conveyor belt (22).

6. Conveying arrangement according to one of Claims 3 to 5, **characterized in that** the bearing surface (35, 36) of the format adjustment device (3) has a recessed area (37), which is designed to receive a partial area of the product.

7. Conveying arrangement according to one of the preceding claims, **characterized in that** the fixing device (33) is a clamping device.

## Revendications

1. Dispositif de transport pour transporter des produits, comprenant
- un dispositif de transport (2) et
- un dispositif de réglage de format (3) avec une première partie de format fixe (31) et une deuxième partie de format (32) déplaçable par rapport à la première partie de format (31) ainsi qu'un dispositif de fixation (33), afin de fixer une position relative entre la première et la deuxième partie de format,
- le dispositif de réglage de format (3) étant disposé sur le dispositif de transport (2) et pouvant être déplacé conjointement avec le dispositif de transport (2),
**caractérisé en ce que**
- le dispositif de transport (2) comprend une première bande transporteuse (21) et une deuxième bande transporteuse (22),
- une pluralité de dispositifs de réglage de format (3) étant disposés sur la première et la deuxième bande transporteuse (21, 22), et
- à chaque fois deux dispositifs de réglage de format (3) de la première bande transporteuse (21) et deux dispositifs de réglage de format (3) de la deuxième bande transporteuse (22) formant une unité de transport afin de transporter un produit (4).

2. Dispositif de transport selon la revendication 1, **caractérisé en ce que** la deuxième partie de format déplaçable (32) présente une fente (33) à travers laquelle peut être guidé un dispositif de fixation (33).

3. Dispositif de transport selon l'une quelconque des revendications précédentes, **caractérisé en ce que** la première partie de format fixe (31) présente une première surface d'appui (36) et la deuxième partie de format déplaçable (32) présente une deuxième surface d'appui (35).

4. Dispositif de transport selon la revendication 3, **caractérisé en ce que** dans une première position d'extrémité du dispositif de réglage de format (3), seulement l'une des surfaces d'appui (35, 36) des parties de format (31, 32) sert d'appui pour le produit à transporter, et dans une deuxième position d'extrémité du dispositif de réglage de format (3), seulement l'autre des surfaces d'appui (35, 36) des parties de format (31, 32) sert d'appui pour le produit à transporter.

5. Dispositif de transport selon la revendication 1, **caractérisé en ce que** le dispositif de réglage de format (3) au niveau de la première bande transporteuse (21) peut être déplacé indépendamment du dispositif de réglage de format (3) au niveau de la deuxième bande transporteuse (22).

6. Dispositif de transport selon l'une quelconque des revendications 3 à 5, **caractérisé en ce que** la surface d'appui (35, 36) du dispositif de réglage de format (3) présente une région renfoncée (37) qui est prévue pour recevoir une région partielle du produit.

7. Dispositif de transport selon l'une quelconque des revendications précédentes, **caractérisé en ce que** le dispositif de fixation (33) est un dispositif de serrage.
